# EUROPEAN PATENT SPECIFICATION

(11) **EP 2 233 194 B1**
(45) Date of publication and mention of the grant of the patent: **08.06.2011**
(21) Application number: 10250240.8
(22) Date of filing: 12.02.2010
(51) Int. Cl.: B01D 46/24

(54) **Honeycomb structure**
Wabenstruktur
Structure en nid d'abeille

(30) Priority: 16.03.2009 JP 2009062378
(43) Date of publication of application: 29.09.2010
(73) Proprietor: NGK Insulators, Ltd., Nagoya-city, Aichi 467-8530 (JP)
(72) Inventor: Yamada, Toshio, Nagoya City Aichi-ken, 467-8530 (JP)
(74) Representative: Paget, Hugh Charles Edward

(56) References cited:
- EP-A1- 1 283 067
- EP-A1- 1 419 816
- EP-A1- 2 108 436
- US-A1- 2006 021 310

## Description

### Background of the Invention and Related Art Statement

The present invention relates to a honeycomb structure and a manufacturing method therefor. More specifically, the present invention relates to a honeycomb structure excellent in strength and thermal shock resistance.

A ceramic honeycomb structure excellent in thermal resistance and corrosion resistance is employed as a carrier for a catalytic device or a filter used for an environmental measure, collection of a specific material or the like in various fields such as chemistry, electric power, and iron and steel. In particular, recently, a honeycomb structure plugged alternately in cell open portions on both the end faces as a plugged honeycomb structure is frequently used as a diesel particulate filter (DPF) for trapping particulate matter (PM) discharged from a diesel engine or the like. As a material for the honeycomb structure used in a high temperature corrosive gas atmosphere, silicon carbide (SiC), cordierite, aluminumtitanate (Al₂TiO₅), and the like, which are excellent in thermal resistance and chemical stability, are suitably used.

Since silicon carbide has relatively large thermal expansion coefficient, a honeycomb structure formed with silicon carbide as the framework may cause a defect due to thermal shock upon use if the size is large. In addition, a defect may be caused due to thermal shock upon combusting and removing trapped particulate matter. Therefore, in the case of manufacturing a honeycomb structure using silicon carbide as the framework and having a larger size than a predetermined size, generally, a plurality of small plugged honeycomb structured segments are manufactured, and then they are bonded together to obtain one large plugged honeycomb structure. The bonding of the segments is performed by the use of a bonding material, which is applied on a side face of a predetermined segment, and a plurality of segments are bonded together at the side face (see, e.g., JP-A-8-28246).

In the case of manufacturing a circular cylindrical or oval honeycomb structure by such a method, generally, after bonding rectangular parallelepiped segments, it is necessary to subject the outer periphery to course machining (i.e., taking out a circular cylindrical shape from a rectangular parallelepiped block formed by bonding the rectangular parallelepiped segments) using an apparatus such as a beads saw and grinding (i.e., grinding the circular cylindrical-shaped article to have necessary dimensional accuracy after the coarse machining) using an apparatus such as a cam grinding machine in order to obtain a circular cylindrical or oval honeycomb structure. Therefore, extra steps such as the outer periphery coarse machining step are required, and there arises a problem of not high raw material yield because the outer periphery is subjected to coarse machining. In addition, since even a honeycomb structure formed by bonding segments has large heat generation inside thereof upon combusting and removing particulate matter, there arises a problem of easily causing a crack inside the honeycomb structure. Further, in a honeycomb structure formed by bonding segments, since the portion where segments are bonded is thick, there arises a problem of easily having large pressure loss when a fluid is allowed to flow into the cells.

In addition, in a honeycomb structure manufactured by bonding a plurality of rectangular parallelepiped segments, since each of the segments has a quadrangular cross section perpendicular to the central axial direction, and the four vertexes are located in the corner portions, the corner portions are sometimes fractured.

EP-A-1283067 discloses composite honeycomb structures in which honeycomb segments are bonded by bonding material. Slits are formed between the segments where the bonding material is absent. The slits are partially filled with filler. EP-A-1419816 shows single honeycomb structures in which slits are formed, extending from one end face to the other; filler may be filled into the slits.

EP-A-2108436 (published 14 October 2009) shows a single honeycomb having slits extending part of its length, to form partial segments. The slits are filled with filler to form buffer portions.

US2006/0021310 shows a composite honeycomb in which honeycomb segments are bonded together at their opposing faces.

### Summary of the Invention

The present invention has been made in view of the aforementioned problems and aims to provide a honeycomb structure excellent in strength and thermal shock resistance.

In order to solve the aforementioned problems, according to the present invention, there is provided the following honeycomb structures.

[1] A honeycomb structure comprising: a honeycomb structured portion having partition walls separating and forming a plurality of cells functioning as fluid passages and extending from one end face to the other end face and having a plurality of partial segments separated and formed by a plurality of slits extending along a cell extension direction and being open on an end face on one side, and a buffer portion disposed in the slits; wherein, in a cross section perpendicular to the cell extension direction, each of the partial segments is formed by a first region having an outer periphery surrounded by a boundary wall formed by smoothly connecting a straight line and a curving line and a second region being located to be adjacent to the first region outside the boundary wall and having a corner portion, and an R portion as an arc-shaped portion of the boundary wall is disposed inside the position having the corner portion of the second region of each of the partial segments, and, in a cross section perpendicular to the cell extension direction, the R portion of the boundary wall has an arc shape having a radius of 1.5 to 10 mm, and the thickness of the boundary wall is 1.1 to 2.0 times the thickness of the partition wall.

[2] The honeycomb structure according to [1], wherein the thickness of a portion not adjacent to the R portion of the boundary wall in the second region corresponds to 5 cells or less.

[3] The honeycomb structure according to [1] or [2], wherein the second region is disposed to surround the entire outer periphery of the first region.

[4] The honeycomb structure according to any one of [1] to [3], wherein a part of the outermost periphery of each of the partial segments is the boundary wall.

Since a honeycomb structure of the present invention is provided with a honeycomb structured portion having a plurality of partial segments separated and formed by a plurality of slits extending along a cell extension direction and being open on an end face on one side and a buffer portion disposed in the slits, fracture of a partial segment due of thermal shock can be inhibited because small partial segments can be formed even in a large honeycomb structure as a whole. In addition, since a gap (slit) between partial segments is filled with a buffer portion, the honeycomb structure has high thermal shock resistance as a whole. In addition, since there is a portion having neither a slit nor a buffer portion on one end face of the honeycomb structure, pressure loss upon sending a fluid into the cells can be reduced.

In addition, according to a honeycomb structure of the present invention, in a cross section perpendicular to the cell extension direction, each of the partial segments is formed by the first region having an outer periphery surrounded by a boundary wall formed by smoothly connecting a straight line and a curving line and the second region being located to be adjacent to the first region outside the boundary wall and having a corner portion, and an R portion as an arc-shaped portion of the boundary wall is disposed inside the position having the corner portion of the second region of each of the partial segments, and, in a cross section perpendicular to the cell extension direction, the R portion of the boundary wall has an arc shape having a radius of 1.5 to 10 mm, and the thickness of the boundary wall is 1.1 to 2.0 times the thickness of the partition wall. Therefore, even if a corner portion in the second region is partially fractured by strong stress applied on the corner portion of a partial segment upon use of the like, the R portion of the boundary wall located inside the corner portion is hardly fractured, and therefore the first region can escape fracture.

### Brief Description of the Drawings

[Fig. 1A] Fig. 1A is a plan view viewed from the end portion side where the slits are open, schematically showing one embodiment of a honeycomb structure of the present invention.

[Fig. 1B] Fig. 1B is a side view schematically showing one embodiment of a honeycomb structure of the present invention.

[Fig. 2] Fig. 2 is a schematic view showing an enlarged portion in the range A of a honeycomb structure shown in Fig. 1A.

[Fig. 3] Fig. 3 is a plan view schematically showing a part of an end face of another embodiment of a honeycomb structure of the present invention.

[Fig. 4] Fig. 4 is a plan view schematically showing a part of an end face of still another embodiment of a honeycomb structure of the present invention.

[Fig. 5] Fig. 5 is a schematic view for explaining the R portion in the first region of a partial segment constituting an embodiment of a honeycomb structure of the present invention.

[Fig. 6] Fig. 6 is a plan view viewed from the end portion side where the slits are open, schematically showing still another embodiment of a honeycomb structure of the present invention.

### Reference Numerals

1: cell, 2: slit, 3: partial segment, 4: honeycomb structured portion, 5: buffer portion, 8: partition wall, 11: first region, 12: second region, 13: corner portion, 14: boundary wall, 15: R portion, 16: outermost peripheral portion, 17: outer peripheral wall, 100, 200, 300, 400: honeycomb structure, A: range, L1, L2: outer peripheral line, C1, C2: intersection, T: thickness

### Detailed Description of the Invention

Next, an embodiment of the present invention will be described in detail with referring to drawings. However, the present invention is by no means limited to the following embodiment, and changes, improvements, and the like may appropriately be added thereto on the basis of general knowledge of a person of ordinary skill within a range of not deviating from the gist of the present invention.

### (1) Honeycomb structure:

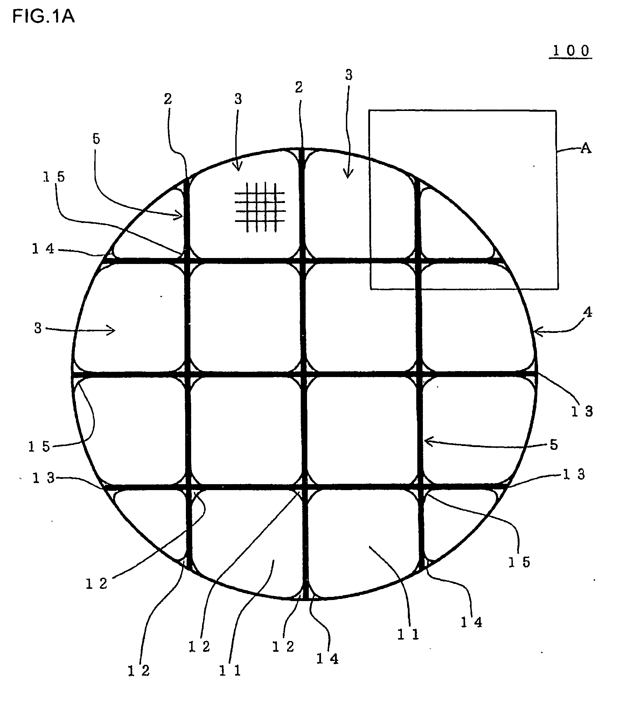

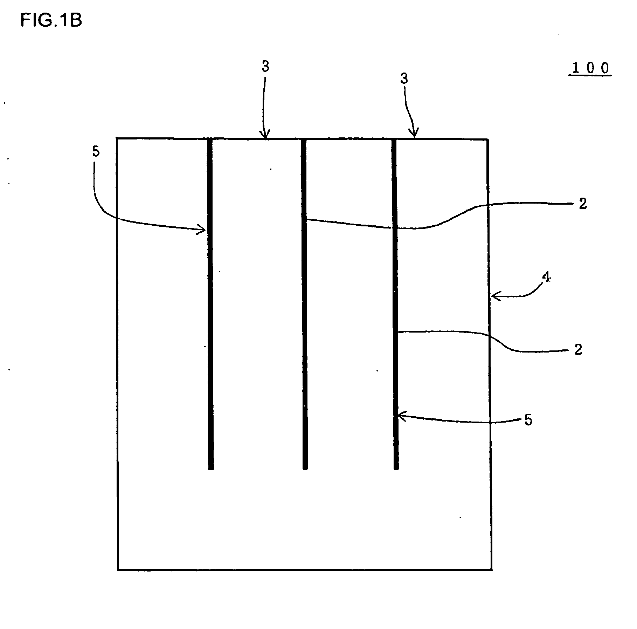

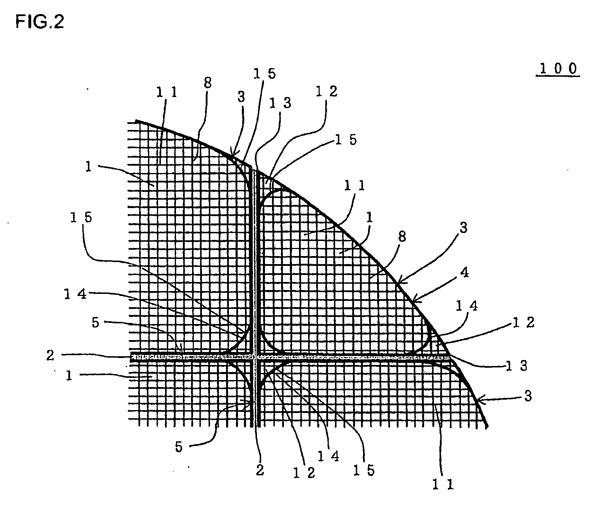

As shown in Figs. 1A, 1B and 2, one embodiment of a honeycomb structure of the present invention is provided with a honeycomb structured portion 4 having partition walls 8 separating and forming a plurality of cells 1 functioning as fluid passages and extending from one end face to the other end face and having a plurality of partial segments 3 separated and formed by a plurality of slits 2 extending along a cell 1 extension direction and being open on an end face on one side and a buffer portion 5 disposed in the slits 2. In addition, in a honeycomb structure 100 of the present embodiment, in a cross section perpendicular to the cell 1 extension direction, each of the partial segments 3 is formed by the first region 11 having an outer periphery surrounded by a boundary wall 14 formed by smoothly connecting a straight line and a curving line and the second region 12 being located to be adjacent to the first region 11 outside the boundary wall 14 and having a corner portion 13, and an R portion 15 as an arc-shaped portion of the boundary wall 14 is disposed inside the position having the corner portion 13 of the second region 12 of each of the partial segments 3, and, in a cross section perpendicular to the cell 1 extension direction, the R portion 15 of the boundary wall has an arc shape having a radius of 1.5 to 10 mm, and the thickness of the boundary wall 14 is 1.1 to 2.0 times the thickness of the partition wall 8.

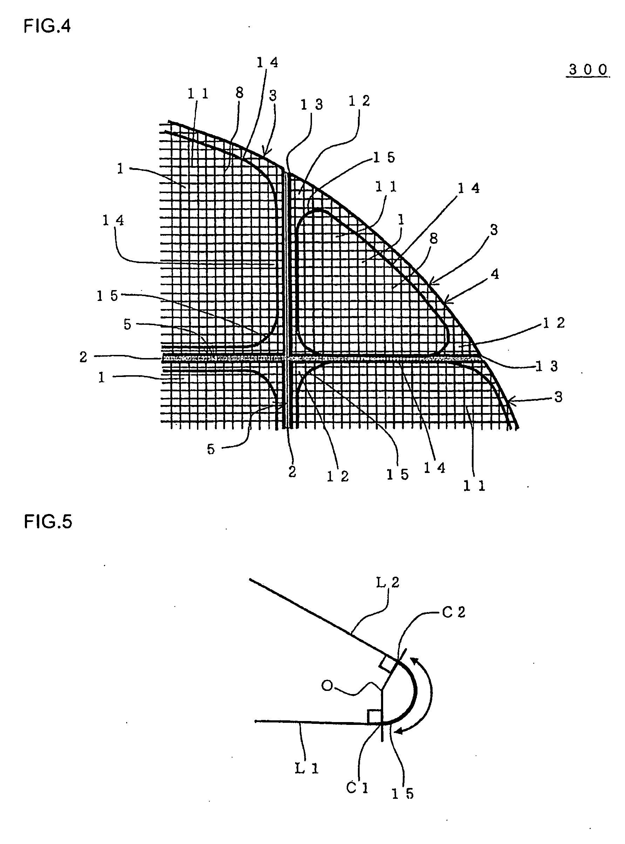

Here, the "partial segments" mean segments separated and formed by slits formed in a honeycomb formed article so as to extend in the cell extension direction (in parallel with the central axis), and the honeycomb formed article has a portion having no slits on the other end face side in such a manner that the segments are connected with one another on the other end face side. In addition, the "R portion 15" is an arc-shaped portion. As shown in Fig. 5, the range of the "R portion 15" is the range from the intersection C1 of the outer peripheral line L1 with the perpendicular line from the center O of the arc of the arc-shaped R-portion to the outer peripheral line L1 to the intersection C2 of the outer peripheral line L2 with the perpendicular line from the center O of the arc of the arc-shaped R-portion to the outer peripheral line L2 when one outer peripheral line connected to the R portion and the other outer peripheral line connected to the R portion in the first region 11 are determined as the outer peripheral line L1 and the outer peripheral line L2, respectively. In addition, the outer peripheral shape of the first region is formed by smoothly connecting a straight line and a curving line. "Smoothly connecting" means that the angle formed by two lines in a portion where the two lines are connected is within the range from 120 to 180°. In addition, the "corner portion" of the second region means a tip portion formed in such a manner that the outer peripheral line of the second region is bent to protrude outside. In addition, the angle of the "corner portion" is 100° or less. That is, in a corner portion, the outer peripheral line is not smoothly connected. Since the second region is located outside the first region, the corner portion of the second region is also a corner portion of a partial segment. Fig. 1A is a plan view viewed from the end portion side where the slits are open, schematically showing one embodiment of a honeycomb structure of the present invention. Fig. 1B is a side view schematically showing one embodiment of a honeycomb structure of the present invention. Fig. 2 is a schematic view showing an enlarged portion in the range A of a honeycomb structure shown in Fig. 1A. Fig. 5 is a schematic view for explaining the R portion in the first region of a partial segment constituting an embodiment of a honeycomb structure of the present invention. Incidentally, in each of the drawings, the same reference numerals are employed for the common constituents.

Since, in a honeycomb structure 100 of the present embodiment, a plurality of partial segments 3 are separated and formed, the partial segments 3 can be made small, and fracture of the partial segment due to thermal shock can be inhibited. Further, since the partial segments 3 are formed by means of a buffer portion 5, thermal expansion of the partial segments 3 is buffered by the buffer portion 5, and fracture of the partial segment 3 can be inhibited. In addition, in a honeycomb structure 100 of the present embodiment, in a cross section perpendicular to the cell 1 extension direction, each of the partial segments 3 is formed by the first region 11 having an outer periphery surrounded by a boundary wall formed by smoothly connecting a straight line and a curving line and the second region 12 being located to be adjacent to the first region 11 outside the boundary wall and having a corner portion 13, and an R portion 15 as an arc-shaped portion of the boundary wall 14 is disposed inside the position having the corner portion 13 of the second region 12 of each of the partial segments 3. Therefore, even if the corner portion 13 of the second region 12 is partially fractured due to strong stress applied on the corner portion 13 of the partial segment 3 upon use or the like, the R portion 15 of the boundary wall 14 located inside the corner portion 13 is hardly fractured, and therefore the first region 11 can escape fracture.

In addition, it is preferable that the buffer portion 5 disposed in the slits 2 is formed by filling a filler into the slits 2. However, if the filler is filled into the slits 2 under high pressure, a corner portion of a segment may be partially fractured. In contrast, since a boundary wall having the R portion as described above is formed in each of the partial segments 2 in the honeycomb structure 100 of the present embodiment, even if a corner portion (corner portion of the second region) of a partial segment is partially fractured, the R portion of the boundary wall located inside the corner portion is hardly fractured, and therefore the first region can escape fracture.

In the honeycomb structure 100 of the present embodiment, the R portion 15 as an arc-shaped portion of the boundary wall 14 is disposed inside the position having the corner portion 13 of the second region 12. "Inside the portion having the corner portion 13" means the range of within 10 mm from the corner portion 13 (distance to the nearest position in the boundary wall). In addition, the R portion is formed so as to have a protrusion toward outside. Also, the corner portion 13 has a pointed shape toward outside.

In the honeycomb structure 100 of the present embodiment, in a cross section perpendicular to the cell extension direction, the R portion 15 of the boundary wall 14 has an arc shape having a radius of 1.5 to 10 mm, preferably 3 to 10 mm. Such a range of the R portion 15 improves strength of the boundary wall 14, and the first region 11 can escape fracture even if strong stress is applied on a corner portion 13 of the partial segment 3. When the radius of the R portion 15 is smaller than 1.5 mm, strength of the boundary wall 14 is deteriorated, which is not preferable. When the radius of the R portion 15 is larger than 10 mm, the region (first region) capable of escaping fracture is small because the second region is too large, which is not preferable. Here, when the radius of the R portion 15 of the boundary wall 14 means the radius of an arc formed by the inside face of the boundary wall 14 or the minimum radius of curvature.

In the honeycomb structure 100 of the present embodiment, the thickness of the boundary wall 14 is 1.1 to 2.0 times the thickness of the partition wall 8, preferably 1.1 to 1.5 times the thickness of the partition wall 8 in that the amount of the raw material to be used can be reduced. Such a range of the thickness of the boundary wall 14 improves strength of the boundary wall 14, and the first region 11 can escape fracture even if strong stress is applied on a corner portion 13 of the partial segment 3. When the thickness of the boundary wall 14 is smaller than 1.1 times the thickness of the partition wall 8, strength of the boundary wall 14 is deteriorated, which is not preferable. When the thickness of the boundary wall 14 is larger than 2.0 times the thickness of the partition wall 8, pressure loss increases, which is not preferable.

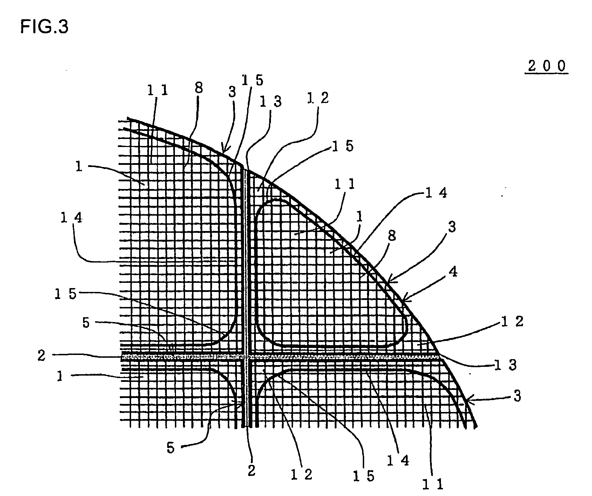

In the honeycomb structure 100 of the present embodiment, the thickness of a portion not adjacent to the R portion 15 of the boundary wall 14 in the second region corresponds to preferably 5 cells or less, more preferably 0 to 3 cells from the viewpoint of making the first region as large as possible. Incidentally, the "thickness of 0 cell" means that there is no portion not adjacent to the R portion 15 of the boundary wall 14. Such a range of the thickness of the portion not adjacent to the R portion 15 of the boundary wall 14 in the second region 12 has an advantage of obtaining the large first region having a higher possibility of escaping fracture. When the thickness of the portion not adjacent to the R portion 15 of the boundary wall 14 in the second region 12 is larger than 5 cells, the first region having a higher possibility of escaping fracture may become small. Here, the "portion not adjacent to the R portion 15 of the boundary wall 14 in the second region 12" means a range obtained by omitting the portion adjacent to the R portion 15 in the second region 12 from the whole second region 12. In addition, the "portion adjacent to the R portion 15 in the second region 12" means the range surrounded by the R portion 15, the two straight lines drawn from both the end portions of the R portion 15 toward outside, and the outer periphery of the second region 12 when the straight lines perpendicular to the R portion 15 were drawn from both the end portions (intersection C1 and intersection C2 in Fig. 5) of the R portion 15. Incidentally, it is not always necessary that the portion not adjacent to the R portion 15 of the boundary wall 14 is present. Therefore, in the honeycomb structure 100 shown in Fig. 1A, the whole second region 12 is "adjacent to the R portion 15". In the honeycomb structure 200 shown in Fig. 3 and the honeycomb structure 300 shown in Fig. 4, both the "portion adjacent to the R portion 15 in the second region 12" and the "portion not adjacent to the R portion 15 in the second region 12" are present.

As shown in Fig. 3, in another embodiment (honeycomb structure 200) of a honeycomb structure of the present invention, the second region is disposed so as to surround the entire outer periphery of the first region. Since the entire outer periphery of the first region 11 is surrounded by the second region 12, which plays a role of a butter layer, the boundary wall 14 located in the outer periphery of the first region is hardly fractured. Fig. 3 is a plan view schematically showing a part of an end face of another embodiment of a honeycomb structure of the present invention.

As shown in Fig. 1A, in the honeycomb structure 100 of the present embodiment, it is preferable that a part of the outermost periphery of the partial segment 3 is the outer periphery of the first region 11. Such a structure has advantages of reduction in the amount of a raw material to be used and lightening of a product because the outermost periphery of the honeycomb segment 3 overlaps the boundary wall. In addition, in the honeycomb structure 300 shown in Fig. 4, which is still another embodiment of a honeycomb structure of the present invention, a part of the outermost periphery of the partial segment 3 serves as the outer periphery of the first region 11. Fig. 4 is a plan view schematically showing a part of an end face of still another embodiment of a honeycomb structure of the present invention.

In the honeycomb structure 100 of the present embodiment, the length (slit depth) of the slits 2 in the central axial direction of the honeycomb structured portion 4 is preferably 25% or more, more preferably 25 to 99%, particularly preferably 25 to 75% of the length of the honeycomb structured portion 4 in the central axial direction. In the case that the particulate matter is combusted and removed after trapping the particulate matter by the honeycomb structure, the region having the highest temperature is present within the range from the end face on the gas outflow side to the position of 25% (excluding the position of 25%) of the length of the honeycomb structure in the central axial direction. Therefore, in the case that gas is allowed to flow in from the end face where the open portions of the slits 2 are not formed and discharged from the end face where the open portions of the slits 2 are formed, the partial segments 3 are present in the region having highest temperature and large thermal shock by the formation of the slits 2 to have a length of 25% or more of the length of the honeycomb structured portion 4 in the central axial direction from the end face of the honeycomb structured portion 4. This can effectively inhibit fracture of the honeycomb structure 100. When the slits 2 are formed over the entire length in the central axial direction of the honeycomb structured portion 4 (when the open portions of the slits 2 are formed on both the end faces of the honeycomb structured portion 4), pressure loss upon passing a fluid through the honeycomb structure 100 may increase because a buffer portion 5 is disposed in the slits 2. On the other hand, when the slits 2 have a length of 99% or less of the length in the central axial direction of the honeycomb structured portion 4, it is possible to inhibit pressure loss from increasing because neither a slit 2 nor a buffer portion 5 disposed in a slit 2 is present in the range of 1% or more on the other end face side of the honeycomb structured portion 4. In the honeycomb structure 100 shown in Fig. 1 are disposed three slits 2 formed in parallel with one another at regular intervals and other three slits 2 formed in parallel with one another at regular intervals and to be perpendicular to the former three slits 2.

In addition, it is possible that the slits extending near the central axis of the honeycomb structure are formed to be long in the central axial direction, while the slits formed in the vicinity of the outer periphery are formed to be short in the central axial direction. In the case of combusting and removing particulate matter trapped by the honeycomb structure, since temperature is higher around the central axis than in the vicinity of the outer periphery, such formation can effectively inhibit fracture of partial segments near the central axis. Here, the "slits extending near the central axis" means "slits extending through the range from the center to 50% of the radius of the outer peripheral circle in a cross section perpendicular to the central axis".

As the size of each of the partial segments 3, a cross section perpendicular to the central axial direction has an area of preferably 3 to 16 cm², more preferably 7 to 13 cm². When it is smaller than 3 cm² a buffer portion, where gas does not circulate or gas hardly circulates, is increased, and therefore pressure loss when gas circulates in the honeycomb structure may increase. When it is larger than 16 cm², a fracture inhibition effect of the honeycomb segments 3 may be deteriorated.

The slit 2 has a thickness of preferably 0.3 to 3.0 mm, more preferably 1.0 to 1.5 mm. When it is smaller than 0.3 mm, a buffer effect between partial honeycomb segments 3 may be deteriorated. When it is larger than 3.0 mm, pressure loss when gas circulates in the honeycomb structure may increase.

In a honeycomb structured portion 4 of the honeycomb structure of the present invention, it is preferable that the partition walls located in portions where slits 2 are formed are thick and that slits are formed so as to cut the thick partition walls (thick portions). In addition, forming a cut so as to cut a partition wall without forming a thick portion is also a preferable embodiment.

In the case of forming slits in the thick portions, the thickness of the thick portions (thickness in the case of having no slit) is preferably larger than the thickness of the slit, preferably 1.3 to 4.0 mm, more preferably 2.0 to 2.5 mm. When it is above 4.0 mm, pressure loss may increase. When it is below 1.3 mm, forming of slits may become difficult.

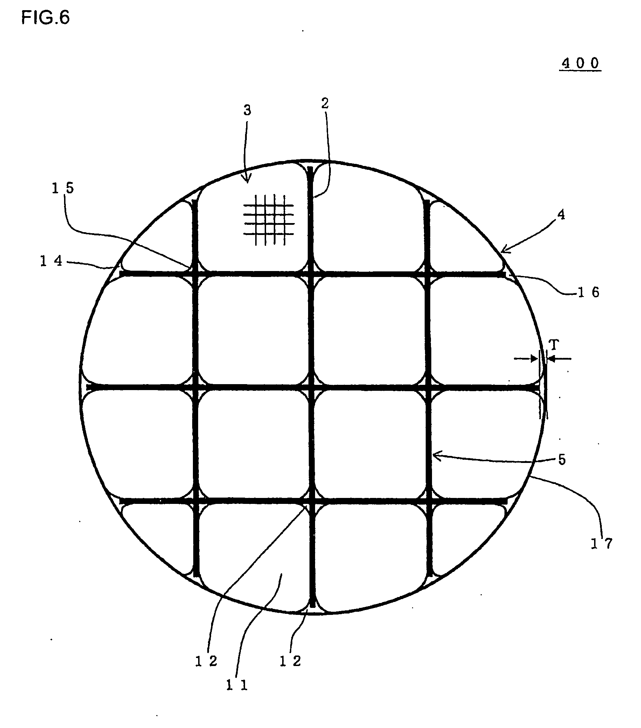

In addition, a honeycomb structure of the present invention, as shown in Fig. 6, may be the honeycomb structure 400, where the slits 2 are formed with leaving the outermost peripheral portion 17 of the honeycomb structured portion 4 without being cut. In the case of leaving the outermost peripheral portion 17 without being cut, the honeycomb structure 400 has a structure where the outer peripheral wall 17 having no open portion of the slits is formed so as to surround the entire partial segments 3 and where the buffer portion 5 is not exposed to the outer peripheral face of the outermost peripheral portion 17 (outer peripheral face of the outer peripheral wall). Therefore, in the manufacture process, neither the outer periphery grinding nor the outer periphery coating treatment is necessary to be able to further improve production efficiency. In addition, in the case of aiming to obtain a smoother outer peripheral face by further reducing unevenness on the outer peripheral face, it is preferable to perform the outer periphery grinding and/or the outer periphery coating treatment. Fig. 6 is a plan view viewed from the end portion side where the slits are open, schematically showing still another embodiment of a honeycomb structure of the present invention.

The thickness T of the outermost peripheral portion 17 (including the outer peripheral wall 16) left with no slit 2 formed therein is preferably 0.1 to 4.0 mm, more preferably 0.3 to 1.0 mm. When it is below 0.1 mm, the outermost peripheral portion may easily break in the steps after slit formation or when the honeycomb structure is used or the like. When it is above 4.0 mm, pressure loss may increase. Incidentally, the thickness T of the outermost peripheral portion means the distance between the end portion of the slit and the outer peripheral face of the outermost peripheral portion (outer peripheral face of the outer peripheral wall 16) in a cross section perpendicular to the cell extension direction.

In addition, the honeycomb structure 100 has a thermal expansion coefficient of preferably 1×10⁻⁶/°C or more, more preferably 2×10-⁶/°C to 7×10⁻⁶/^{o}C. A honeycomb structure of the present invention is a honeycomb structure having thus high thermal shock resistance even with high thermal expansion efficiency.

The honeycomb structured portion 4 constituting the honeycomb structure 100 of the present embodiment may have a desired shape such as a circular cylindrical shape or an oval shape. In addition, as the size of the honeycomb structured portion 4, for example, in the case of a circular cylindrical shape, the radius of the bottom face is preferably 18 to 250 mm, more preferably 50 to 150 mm. In addition, the length in the central axial direction of the honeycomb structured portion 4 is preferably 80 to 400 mm, more preferably 100 to 310 mm. As the material for the honeycomb structured portion 4, ceramic is preferable, more preferably at least one kind selected from the group consisting of silicon carbide, silicon-silicon carbide based composite material, cordierite, mullite, alumina, spinel, silicon carbide-cordierite based composite material, lithium aluminum silicate, aluminum titanate, and iron-chrome-aluminum based alloy from the viewpoints of excellent strength and thermal resistance. Of these, silicon carbide or a silicon-silicon carbide based composite material is particularly preferable. Since silicon carbide has relatively large thermal expansion coefficient, a large honeycomb structure formed with silicon carbide as the framework sometimes causes a defect due to thermal shock upon use. However, by forming a plurality of partial segments by a plurality of slits and disposing a buffer portion as a honeycomb structure of the present invention, small partial segments can be formed, and thermal expansion of silicon carbide is buffered by the buffer portion. Therefore, an effect of inhibiting generation of a crack in the honeycomb structure can be exhibited.

The honeycomb structured portion 4 is may increase. The mean particle size of the raw material is measured according to JIS R 1629.

A honeycomb structured portion 4 has a mean pore size of preferably 5 to 50 µm, more preferably 7 to 35 µm. By setting the mean pore size in such a range, particulate matter can effectively be trapped. When the mean pore size is below 5 µm, clogging with the particulate matter (PM) may easily be caused. When the mean pore size is above 50 µm, the particulate matter (PM) may pass through the filter without being trapped. The mean pore size is measured with a mercury porosimeter.

In the case that the material for the honeycomb structured portion 4 is silicon carbide, the mean particle size of the silicon carbide particles is preferably 5 to 100 µm. By setting the mean particle size in such a range, the porosity and the pore diameter can easily be controlled suitably for a filter. When the mean particle size is smaller than 5 µm, the pore size becomes too small. When it is larger than 100 µm, porosity may become too low. When the pore size is too small, clogging with particulate matter (PM) is easily caused. When the porosity is too low, pressure loss end face, a plurality of slits extending along the cell extension direction and open on one end face are formed in the honeycomb formed article so as to separate and form a plurality of partial segments to obtain a honeycomb structure having slits, and a buffer portion disposed so as to fill the slits is formed by filling the slits of the honeycomb structure having slits with the filler to obtain a honeycomb structure. A honeycomb structure manufactured by a method for manufacturing a honeycomb structure of the present invention is preferably a fired structure. Therefore, in a method for manufacturing a honeycomb structure of the present invention, it is preferable that, after forming a honeycomb formed article, it is fired to obtain a honeycomb fired article, followed by forming slits in the honeycomb fired article to obtain a honeycomb structure having slits. Alternatively, it is also preferable to manufacture a honeycomb structure having slits by forming slits in the honeycomb formed article, followed by firing.

There is no particular limitation on the cell shape (cells shape in a cross section perpendicular to the central axial direction (cell extension direction) of the honeycomb structured portion 4) of the honeycomb structured portion 4, and, for example, a triangle, a quadrangle, a hexagon, an octagon, a circle, or a combination thereof (e.g., a combination of a quadrangle and an octagon). The thickness of the partition walls of the honeycomb structured portion 4 is preferably 50 to 2000 µm. When the thickness of the partition walls is smaller than 50 µm, strength of the honeycomb structure may be deteriorated. When it is larger than 2000 µm, pressure loss may increase. Though the cell density of the honeycomb structured portion 4 is not particularly limited, it is preferably 0.9 to 311 cells/cm², more preferably 7.8 to 62 cells/cm².

The honeycomb structure 100 of the present embodiment is preferably a plugged honeycomb structure where plugging is performed in the open portions of the predetermined cells in one end face of the honeycomb structured portion 4 and in the open portions of the other cells in the other end face. The predetermined cells and the other cells are alternately disposed, and both the end faces preferably show a checkerwise pattern. Though it is preferable to perform plugging in such a manner, it is also possible that plugging is not performed.

It is preferable that the buffer portion 5 constituting the honeycomb structure 100 of the present embodiment is disposed so as to be filled into the whole space (whole slits) of the slits 2 in the honeycomb structured portion 4. In such a case, the length of the buffer portion 5 (depth of the buffer portion) in the central axial direction is the same as the depth of the slits. The material for the buffer portion 5 is preferably a material obtained by drying and firing the slurry obtained by kneading a mixture containing inorganic fibers, colloidal silica, clay, SiC particles, an organic binder, a resin balloon, and a dispersant with adding water thereto. The buffer portion 5 is preferably obtained by filling the above slurry as a filler into the slits.

An outer peripheral coat may be formed in the outer periphery of honeycomb structure 100 of the present embodiment. Though the material of the outer peripheral coat is not particularly limited, there may be used a material obtained by drying a mixture of inorganic fibers, colloidal silica, clay, SiC particles, an organic binder, a resin balloon, a dispersant, and water.

### (2) Method for manufacturing a honeycomb structure:

In a method for manufacturing a honeycomb structure of the present invention, the forming raw material is subjected to extrusion forming to obtain a honeycomb formed article having partition walls separating and forming a plurality of cells functioning as fluid passages and extending from one end face to the other preferably porous. The honeycomb structured portion 4 has a porosity of preferably 30 to 80%, more preferably 40 to 65%. By adjusting the porosity in such a range, pressure loss can be reduced with maintaining strength. When the porosity is below 30%, pressure loss may increase. When the porosity is above 80%, strength is deteriorated, and the thermal conductivity may be deteriorated. The porosity is measured with a mercury porosimeter.

### (2-1) One embodiment of method for manufacturing honeycomb structure:

In a preferable method for manufacturing a honeycomb structure of the present embodiment, the forming raw material is subjected to extrusion forming to obtain a honeycomb formed article having partition walls separating and forming a plurality of cells functioning as fluid passages and extending from one end face to the other end face, the honeycomb formed article is fired to form a honeycomb fired article, a plurality of slits extending along the cell extension direction and not reaching the other end face are formed in the honeycomb fired article so as to separate and form a plurality of partial segments to obtain a honeycomb structure having slits, a buffer portion disposed so as to fill the slits is formed by filling the slits of the honeycomb structure having slits with the filler, and the outer peripheral coat is applied to obtain a honeycomb structure. In addition, it is preferable that forming of a honeycomb formed article is performed to have a structure where, in a cross section perpendicular to the cell extension direction, each of the partial segments is formed by a first region having an outer periphery surrounded by a boundary wall formed by smoothly connecting a straight line and a curving line and a second region being located to be adjacent to the first region outside the boundary wall and having a corner portion, and an R portion as an arc-shaped portion of the boundary wall is disposed inside the position having the corner portion of the second region of each of the partial segments, and, in a cross section perpendicular to the cell extension direction, the R portion of the boundary wall has an arc shape having a radius of 1.5 to 10 mm, and the thickness of the boundary wall is 1.1 to 2.0 times the thickness of the partition wall. In addition, it is preferable that, after manufacturing a honeycomb formed article, plugging is performed alternately in cell open portions on both the end faces to form a plugged honeycomb formed article, followed by firing the plugged honeycomb formed article to form a honeycomb fired article. Incidentally, it is also possible that, after firing the honeycomb formed article, plugging is performed, followed by firing again to fire the plugging portions. In the case of manufacturing a honeycomb structure having a large circular cylindrical shape or the like with a material having high thermal expansion coefficient, such as silicon carbide, after rectangular parallelepiped segments are manufactured and bonded together to obtain a large rectangular parallelepiped bonded article in order to inhibit fracture due to thermal shock at high temperature, it is generally necessary to subject the outer periphery to coarse machining and grinding to obtain a honeycomb structure having a circular cylindrical shape or the like. Therefore, extra steps such as the outer periphery coarse machining step are required, and the raw material yield is not high because the outer periphery is subjected to coarse machining. In contrast, since the method for manufacturing a honeycomb structure of the present embodiment has neither the step of bonding rectangular parallelepiped segments together nor the step of subjecting the outer peripheral portion to coarse machining for manufacturing a circular cylindrical honeycomb formed article having a desired size, the production efficiency is high, and the raw material yield is also high because the outer peripheral portion is not subjected to coarse machining. Hereinbelow, description will be made step by step.

### (2-1-1) Manufacture of honeycomb fired article:

In the first place, to a ceramic raw material are added a binder, a surfactant, and water to obtain a forming raw material. A pore former may be added to the forming raw material. Preferable examples of the ceramic raw material is at least one kind selected from a group consisting of silicon carbide, silicon-silicon carbide based composite material, cordierite, mullite, alumina, spinel, silicon carbide-cordierite based composite material, lithium aluminum silicate, aluminum titanate, and iron-chrome-aluminum based alloy. Of these, silicon carbide or a silicon-silicon carbide based composite material is particularly preferable. In the case of using silicon-silicon carbide based composite material, a mixture of a silicon carbide powder and a metal silicon powder is used as the ceramic raw material. The preferable ceramic raw material content is 35 to 81 mass% with respect to the entire forming raw material.

Examples of the binder include methyl cellulose, hydroxypropoxyl cellulose, hydroxyethyl cellulose, carboxymethyl cellulose, and polyvinyl alcohol. Of these, it is preferable to use methyl cellulose and hydroxypropoxyl cellulose together. The binder content is preferably 1 to 20 mass% with respect to the entire forming raw material.

The water content is preferably 18 to 45 mass% with respect to the entire forming raw material.

Examples of the surfactant include ethylene glycol, dextrin, fatty acid soap, and polyalcohol. These may be used alone or as a combination of two or more kinds. The surfactant content is preferably 0 to 5 mass% with respect to the entire forming raw material.

The pore former is not particularly limited as long as it can form pores after firing, and examples of the pore former include starch, a resin balloon, water-absorbing resin, and silica gel. The pore former content is preferably 0 to 15 mass% with respect to the entire forming raw material.

Next, the forming raw material is kneaded to obtain kneaded clay. There is no particular limitation on a method for forming kneaded clay by kneading the forming raw material, and a method using, for example, a kneader or a vacuum kneader may be employed.

Next, the kneaded clay is formed to obtain a honeycomb formed article. There is no particular limitation on the method for forming a honeycomb formed article by forming the kneaded clay, and a conventionally know method such as extrusion forming and injection forming may be employed. A suitable example is a method for forming a honeycomb formed article by extrusion forming using a die having desirable cell shape, partition wall thickness, and cell density. In particular, it is preferable to use a die giving a structure where, in a cross section perpendicular to the cell extension direction, each of the partial segments is formed by a first region having an outer periphery surrounded by a boundary wall formed by smoothly connecting a straight line and a curving line and a second region being located to be adjacent to the first region outside the boundary wall and having a corner portion, and an R portion as an arc-shaped portion of the boundary wall is disposed inside the position having the corner portion of the second region of each of the partial segments. As the material for the die, a superhard alloy hardly abrading away can preferably be used. The honeycomb formed article may have a shape of uniform partition wall thickness or a shape including a thick portion, where a slit is formed in a latter step. The thickness of the thick portion may be the same as the thick portion of the aforementioned one embodiment of a honeycomb structure of the present invention.

It is preferable that the honeycomb formed article obtained above is subjected to drying before firing. There is no particular limitation on the drying method, and examples of the drying method include an electromagnetic wave heating method such as microwave heat-drying and high frequency dielectric heat-drying and an external heating method such as hot air drying and superheated steam drying. Of these, in that the whole formed article can be dried quickly and uniformly without causing a crack, it is preferable that, after drying a certain amount of water by an electromagnetic wave heating method, the remaining water is dried by an external heating method. As the drying conditions, it is preferable that after removing water of 30 to 90 mass% with respect to the water content before drying by an electromagnetic wave heating method, water content is reduced to 3 mass% or less by an external heating method. As drying conditions, a dielectric heat-drying is preferable in the case of an electromagnetic wave heating method, and hot air drying is preferable in the case of an external heating method.

Next, in the case that the honeycomb formed article does not have desired length in the central axial direction, both the end portions are cut away to obtain the desired length. Though there is no particular limitation on the method for cutting, a method using a circular sawing machine or the like may be employed.

Next, plugging is preferably performed in the open portions of the predetermined cells on one side end face and the open portions of the other side end face of the honeycomb formed article. There is no particular limitation on the method for plugging, and, for example, the following method can be employed. After applying a sheet on the one side end face of the honeycomb formed article, holes are made in positions corresponding with the cells to be plugged of the sheet. Then, the end face having the sheet applied thereon of the honeycomb formed article is immersed in plugging slurry obtained by slurrying the constituent material for plugging to fill the plugging slurry in the open end portions of the cells to be plugged through the holes made in the sheet. Regarding the other side end face of the honeycomb formed article, plugging is performed (the plugging slurry is filled) in the cells having no plugging on the one side end face in the same method as in the method for performing plugging on the aforementioned one side end face. As the constituent material for plugging, it is preferable to use the same material as that for the honeycomb formed article.

Next, the honeycomb formed article is fired to obtain a honeycomb fired article. Before firing, in order to remove the binder or the like, calcination is preferably performed. Thecalcinationispreferably performed at 400 to 500°C for 0.5 to 20 hours in an ambient atmosphere. There is no particular limitation on the method for the calcination and firing, and firing can be performed by the use of an electric furnace, a gas furnace, or the like. Preferable conditions are 1300 to 1500°C for 1 to 20 hours in an inert atmosphere such as nitrogen, argon, or the like.

### (2-1-2) Manufacture of honeycomb structure having slits:

A honeycomb structure having slits can be obtained by forming a plurality of slits extending from one end face along the cell extension direction to separate and form a plurality of partial segments and not reaching the other end face(not open on the other end face) in the honeycomb fired article. Here, the "plurality of slits 2 extending from one end face along the cell extension direction and not reaching the other end face" means a state where the slits are formed, that is, it shows disposition of the slits in the honeycomb fired article and means that the slits extending in the central axial direction are formed to reach (be open on) one side end face (in the state that the one side end face is cut). Therefore, it does not mean cutting toward the other side end face with abutting a cut-forming apparatus on the one side end face. Therefore, in the operation of forming the slits, cutting may be started from the one side end face or from the side face.

In the case of forming a honeycomb structure 100 shown in Figs. 1A and 1B, the honeycomb structure having slits preferably has a structure wherein slits (open slits) formed in such a manner that both the end portions of the linear slits on one side end face (both the end portions of each of the slits on one side end face) reach the outermost peripheral portion (are open on the side face). Here, "one side end face" means an end face of the honeycomb structure 100 shown in Fig. 1A and the end face on the upper side of Fig. 1B. When such slits are formed, it is preferably used a disc multi grinding stone, a multi blade saw, a multi wire saw, or the like. With the disc multi grinding stone, slits can be formed in the honeycomb fired article by disposing a plurality of disc grinding stones on the side of the outer peripheral portion of the honeycomb fired article in parallel with one another and moving them in parallel with on side end face of the honeycomb fired article with rotating them. For example, there may be employed Ultra-High Speed Grinding Machine produced by ELB-SCHLIFF Werkzeugmashinen. In addition, with the multi blade saw, slits can be formed in a honeycomb fired article by disposing a plurality of stick-like (or plate-like) grinding stones in parallel with one another on one side end face and moving them from the one side end face toward the other side end face with reciprocating each of them in parallel with the one side end face. For example, the Blade Saw (trade name) produced by Nomura Machine Tool Works Ltd. In addition, with the multi wire saw, a plurality of wire-shaped grinding stones are disposed in parallel with one another on one side end face and moving them from the one side end face toward the other side end face with reciprocating each of them in parallel with the one side end face or with continuously moving them in one direction. For example, the Multi Wire Saw (trade name) produced by Takatori Corporation. On the inner surfaces of the slits, a partition wall may remain or does not have to remain.

In addition, in the case of forming the slit, having a structure where at least one of the two ends does not reach the outermost peripheral portion (side face) on one side end face (closed slit), there is preferably used a ultrasonic vibration blade method or a low frequency vibration blade method. In the vibration blade method, slits are formed in the honeycomb fired article by abutting, on one side end face of the honeycomb fired article, a tip end in the longitudinal direction of a stick-shaped or plate-shaped blade extending in the longitudinal direction or a cylindrical blade having the same cross-sectional shape as a cross section perpendicular to the central axial direction of the slits with subjecting the blade to ultrasonic vibrations. Since slits are formed by the use of a tip portion of a stick-shaped or plate-shaped blade, slits can be formed in any position of one side end face of the honeycomb fired article. As a machining apparatus of a vibration blade type, for example, Ultrasonic Machine produced by NDK, Incorporated can be used. In addition, slits can be formed by a low frequency vibration blade method in the same manner as in the ultrasonic vibration blade method. As a difference between the ultrasonic vibration blade method and the low frequency blade method, the blade is vibrated by ultrasonic waves in the ultrasonic blade method, while the blade is vibrated by an eccentric motor, a cam mechanism, an eccentric spindle mechanism, or the like.

In a method for manufacturing a honeycomb structure of the present embodiment, it is preferable that a thick portion is formed and that a slit is formed in the thick portion. However, it is also a preferable embodiment where a slit is formed by cutting a partition wall without forming a thick portion.

### (2-1-3) Manufacture of honeycomb structure:

A filler is filled into the slits of the honeycomb structure having slits to form a buffer portion disposed to fill the slits, thereby obtaining a honeycomb structure. It is preferable to fill the entire slits with the buffer portion. As a method for filling the filler into the slits, there is a method where a filler is dispersed in a dispersion medium such as water to obtain slurry, which is filled into the slits. When the slurry is filled into the slits, it is preferable to put the honeycomb structure having slits in a sealed container and wrap a tape or the like in the outer periphery lest the slurry should leak out from the outer periphery. When the honeycomb structure having slits is large, the slurry can be filled without applying high pressure by filling the slurry from a plurality of positions. As the material for the tape wrapped around the outer periphery of the honeycomb structure having slits, a material which is not permeated with water such as polyester. In this case, when slurry is tried to filled in a state that the honeycomb structure having slits is immobilized, in the case that the honeycomb structure is porous, slurry may not spread uniformly in the slits due to absorption of the dispersion medium by the partition walls. Therefore, in such a case, it is preferable to fill the slurry with vibrating the honeycomb structure having slits by the use of a vibration apparatus. As the vibration apparatus, for example, small type vibration testing machine produced by Asahi Seisakusho, Co., Ltd. can be used. In addition, in order to let the slurry uniformly enter the slits more easily, it is preferable to subject the inside walls of the slits (outer peripheral walls of partial segments) to a water repellent treatment. As the water repellent treatment, splaying slurry containing SiC particles or the like is preferable. After filling the slurry in slits under pressure, it is preferable to perform drying at 100°C or more. In addition, as a method for forming the buffer portion, there may be employed a method where a plurality of tape-shaped fillers are filled into the slits, followed by heating to form the buffer portion. There is no particular limitation on the method for forming the filler into a tape shape, and there may be employed a method where a forming raw material is prepared by mixing a filler, a binder, a surfactant, water, and the like to form the forming raw material into a tape shape by a tape forming method. As a method for forming the buffer portion, there may be employed a method where a powdered filler is filled into the slits, followed by sealing the open portions of the slits (portion where the filler is exposed on the surface of the honeycomb structure having slits) with cement, an adhesive, or the like lest the filler should come out from the slits. The powdered filler can be filled into the slits by tapping.

As the filler, there may be employed slurry obtained by kneading a mixture of inorganic fibers, colloidal silica, clay, SiC particles, an organic binder, a foaming resin, a dispersant, and water. In the case of filling a tape-shaped filler into the slits, a material foamable by a thermal treatment is used as the filler, and it is preferable to heat the honeycomb structure having slits after the filler is inserted into the slits. As the material foamable by a thermal treatment, urethane resin or the like may be employed.

### (2-1-4) Outer peripheral coat treatment:

It is preferable to perform an outer periphery coat treatment after forming the honeycomb structure. As the outer periphery coat treatment, there may be employed a method where an outer periphery coat material is applied on the outer periphery of the honeycomb structure and dried. As the outer periphery coat material, a mixture of inorganic fibers, colloidal silica, clay, SiC particles, an organic binder, a foaming resin, a dispersant, water, and the like can be employed. There is no particular limitation on the method for applying the outer periphery coat material, and there may be employed a method where the material is coated by the use of a rubber spatula with rotating a product on a potter's wheel.

In the case of forming a honeycomb structure where the slits are formed with leaving the outer peripheral portion of the honeycomb structural portion without being cut, since the buffer portion is not exposed on the outermost peripheral portion, the outer periphery coat treatment is not necessary, and therefore production efficiency can further be improved. In addition, in the case of trying to form a smoother outer peripheral face by further reducing the unevenness of the outer peripheral face, it is further preferable to perform an outer periphery grinding treatment and/or an outer periphery coat treatment.

### (2-2) Another embodiment of method for manufacturing honeycomb structure:

In another embodiment of a method for manufacturing a honeycomb structure of the present invention, a forming raw material is subjected to extrusion forming to obtain a honeycomb formed article having partition walls separating and forming a plurality of cells functioning as fluid passages and extending from one side end face to the other side end face, a plurality of slits extending in the central axial direction from one side end face and not reaching the other side end face are formed in the honeycomb formed article so as to separate and form a plurality of partial segments, firing the honeycomb formed article with slits to form a honeycomb structure having slits, filling a filler into the slits of the honeycomb structure having slits to form a buffer portion disposed so as to fill the slits, and applying the outer peripheral coat to obtain a honeycomb structure. That is, in another embodiment of a method for forming a honeycomb structure, firing of the honeycomb formed article is not performed before forming the slits but performed after the slits are formed. Thus, by forming the slits before firing the honeycomb formed article, chips or shavings generating upon forming the slits can be reused. Incidentally, when the slits are formed after firing, since the composition of the chips or shavings is different from that of the initial forming raw material due to firing, it cannot be reused. In addition, by firing after forming the slits, the stress generating in the honeycomb formed article upon firing can be relaxed due to the slits, and breakage due to firing can be inhibited.

In the embodiment of a method for manufacturing a honeycomb structure of the present invention, the conditions of operations or the like in each step are the same as the aforementioned one embodiment of a method for manufacturing a honeycomb structure of the present invention except that the order of firing and slit formation are inverse.

### Example

Hereinbelow, the present invention will be described more specifically with referring to Examples. However, the present invention is by no means limited to the present Embodiment.

### (Example 1)

As the ceramic raw material, a SiC powder and a metal Si powder were mixed at a mass ratio of 80:20, and to the mixture were added methyl cellulose, hydroxypropoxy methyl cellulose as forming auxiliaries, starch and water absorbing resin as pore formers, a surfactant, and water, followed by kneading with a vacuum kneader to obtain kneaded clay.

The kneaded clay having a circular cylindrical shape obtained above was formed into a honeycomb shape by the use of extrusion forming machine and then subjected to high frequency dielectric heat-drying and following drying at 120°C for 2 hours by the use of a hot air drier, followed by cutting both the end faces at a predetermined amount to obtain a honeycomb formed article to have a circular cylindrical shape having a partition wall thickness of 305 µm, a cell density of about 54.3 cells/cm² (350 cells/in.²), a bottom face diameter of 145 mm, and a length of 175 mm after firing. The honeycomb formed article was provided with a structure corresponding with the boundary wall 14 formed in the honeycomb structure 100 shown in Fig. 1A. Incidentally, the partition wall thickness of the honeycomb formed article was made to be uniform over the entire article without forming a thick portion. In addition, the cell extension direction was the central axial direction of the honeycomb formed article.

Regarding the honeycomb formed article obtained above, an end portion of each of the cells were plugged in such a manner that adjacent cells are plugged in the mutually opposite end portions so that both the end faces show a checkerwise pattern. As the filler for the plugging, the same material as that for the honeycomb formed article was used.

After the plugging, the plugged honeycomb formed article was dried at 120°C for five hours by the use of a hot air drier, degreased at about 450°C for five hours by the use of an atmospheric furnace with a deodorizer in an ambient atmosphere, and then fired at about 1450°C for five hours in an Ar inert atmosphere to obtain a plugged porous honeycomb fired article where SiC crystal particles were bonded with Si. The honeycomb fired article had the mean pore size of 13 µm and a porosity of 41%. The mean pore size and the porosity were measured by a mercury porosimeter.

The slits were formed in the honeycomb fired article obtained above to form a honeycomb structure having slits. The slits were formed by the use of a disc multi grinding stone (Ultra-High Speed Grinding Machine produced by ELB-SCHLIFF Werkzeugmashinen). As shown in a honeycomb structure 100 shown in Fig. 1A, in one side end face of the honeycomb fired article, three slits in parallel with one another and other three slits perpendicular to the former three slits were formed to form 16 partial segments (slit pattern: 3×3). The distance between two adjacent slits was 36 mm. The length of the slits (depth of the slits) in the central axial direction of the honeycomb fired article (structured portion) was set to 25% of the length of the honeycomb fired article in the central axial direction. All the slits had the same slit depth. The width of the slits was set to 1 mm.

The filler was slurried and filled into the entire slits of the honeycomb structure having slits to form a buffer portion 5, and thereby a honeycomb structure was obtained. Since the filler was filled into the entire slits, the filler depth was the same as the slit depth. As the filler, a mixture of aluminosilicate inorganic fibers and SiC particles was used. As the slurry containing the filler, there was used slurry containing 30 parts by mass of water, 30 parts by mass of aluminosilicate, and 30 parts by mass of SiC particles with respect to 100 parts by mass of the filler. Upon filling the slurry into the slits, the honeycomb structure having slits was put in a sealed container, a polyester based tape (Scotch tape, trade name, produced by Sumitomo 3M Limited) was wrapped around the outer periphery lest the slurry should leak out from the outer periphery, and the slurry was put in the slits under pressure. The honeycomb structure obtained above had a boundary wall thickness of 340 µm, and the radius of the R portion of the boundary wall was 1.5 mm. In addition, the honeycomb structure obtained above had a structure where the second region has a portion not adjacent to the R portion of the boundary wall as shown in Fig. 3. The thickness of the portion not adjacent to the R portion of the boundary wall (thickness of the second region) corresponded with the two cells. The honeycomb structure obtained above was measured for the regeneration limit value (g/liter), pressure loss (%), isostatic strength (%), and defect rate (%) by the following methods. The results are shown in Table 1. In Table 1, the "boundary wall thickness / partition wall thickness ratio" is a value obtained by dividing the "boundary wall thickness" by the "partition wall thickness".

### (Regeneration limit value)

Using the honeycomb structure as a DPF, the soot deposition amount was gradually increased to perform regeneration (soot combustion) and confirm the limit where a crack generated. In the first place, a ceramic mat which was not thermally expandable was wrapped around the outer periphery of the honeycomb structure obtained above as the holding material, and they were put in a can made of SUS409 to obtain a canning structure. Then, combustion gas containing soot generated by combustion of a diesel fuel (light oil) was allowed to flow into the honeycomb structure from an end face (end face where no slit is formed) and discharged from the other end face, thereby depositing the soot inside the honeycomb structure. After the honeycomb structure was cooled down to room temperature, combustion gas containing oxygen at a predetermined rate at 680°C was allowed to flow into the honeycomb structure, and the combustion gas flow rate was reduced when the pressure loss of the honeycomb structure was lowered, thereby rapidly combusting soot. Then, the presence/absence of crack generation in the plugged honeycomb structure is confirmed. This test was started when the soot deposition amount was 4g per 1 liter (hereinbelow referred to as 4 g/liter or the like) of the capacity of the honeycomb structure, and the soot deposition amount was increased by 0.5 (g/liter) until crack generation was confirmed, which was repeated. The measurement results of the regeneration limit value shown in Table 1 were based on the measurement result of the honeycomb structure (honeycomb structure having no boundary wall) of Comparative Example 1. That is, the results show the values each obtained by deducting the measurement result of the regeneration limit value (g/liter) of the honeycomb structure of Comparative Example 1 from the measurement result (average value of measurement of 5 (N=5) honeycomb structures in each Example) of the regeneration limit value (soot amount when the initial crack generated) in the honeycomb structures in each Example.

### (Pressure loss)

The pressure loss of the honeycomb structures was measured by the use of an evaluation standard wind tunnel (pressure loss measurement apparatus for a filter described in JP-A-2005-172652). In this measurement, the fluid flow rate was 10 Nm³/min., and the temperature in the experiment was 25°C. The measurement results of the pressure loss shown in Table 1 were based on the measurement result of a honeycomb structure (honeycomb structure with no boundary wall) of Comparative Example 1. That is, the results are shown by a ratio of each of the values each obtained by deducting the measurement result of the pressure loss of the honeycomb structure of Comparative Example 1 from the measurement result (average value of measurement of 5 (N=5) honeycomb structures in each Example) of the pressure loss in the honeycomb structures in each Example to the measurement result of the pressure loss of the honeycomb structure of Comparative Example 1.

### (Isostatic strength)

Isostatic strength was measured according to the method for measuring isostatic rupture strength prescribed in JASO standard M505-87, which is an automotive standard issued by Automotive Engineers of Japan, Inc. The measurement results of the isostatic strength shown in Table 1 were based on the measurement result of a honeycomb structure (honeycomb structure with no boundary wall) of Comparative Example 1. That is, the results are shown by a ratio of each of the values each obtained by deducting the measurement result of the isostatic strength of the honeycomb structure of Comparative Example 1 from the measurement result (average value of measurement of 5 (N=5) honeycomb structures in each Example) of the isostatic strength in the honeycomb structures in each Example to the measurement result of the isostatic strength of the honeycomb structure of Comparative Example 1.

### (Defect rate)

The results of the defect rate shown in Table 1 show values based on the result of the honeycomb structure (honeycomb structure with no boundary wall) of the honeycomb structure of Comparative Example 1. That is, the results show values obtained by deducting the rate of defects generating in the honeycomb structures of the Comparative Example 1 from the rate of defects in the honeycomb structures in each Example (rate of defects such as crack generation upon forming, for example, a filler layer when 200 (N=200) honeycomb structures were manufactured in each Example).

**Table 1**

| | Slit pattern | Slit depth (%) | Boundary wall thickness wall (µm) | Boundary wall thickness / partition thickness ratio (time) | Radius of R portion (mm) | Thickness of second region | Regeneration limit value (g/liter) | Pressure loss (%) | Isostatic strength (%) | Defect rate (%) |
|---|---|---|---|---|---|---|---|---|---|---|
| Example 1 | 3×3 | 25 | 340 | 1.1 | 1.5 | 2 cells | +0.5 | +1.1 | +7 | -4 |
| Example 2 | 3×3 | 50 | 340 | 1.1 | 1.5 | 2 cells | +0.5 | +1.1 | +7 | -4 |
| Example 3 | 3×3 | 75 | 340 | 1.1 | 1.5 | 2 cells | +0.5 | +1.1 | +7 | -4 |
| Example 4 | 3×3 | 99 | 340 | 1.1 | 1.5 | 2 cells | +0.5 | +1.1 | +7 | -4 |
| Example 5 | 3×3 | 25 | 340 | 1.1 | 10 | 2 cells | +0.5 | +1.1 | +10 | -6 |
| Example 6 | 3×3 | 75 | 340 | 1.1 | 5 | 2 cells | +0.5 | +1.1 | +8 | -5 |
| Example 7 | 3×3 | 99 | 340 | 1.1 | 10 | 2 cells | +0.5 | +1.1 | +10 | -6 |
| Example 8 | 2×3 | 75 | 390 | 1.1 | 2 | 2 cells | +0.5 | +1.1 | + 7 | - 4 |
| Example 9 | 2×2 | 75 | 340 | 1.1 | 5 | 2 cells | +0.5 | +1.1 | +8 | -5 |
| Example 10 | 1×1 | 75 | 340 | 1.1 | 10 | 2 cells | +0.5 | +1.1 | +10 | -6 |
| Example 11 | 3×3 | 75 | 610 | 2.0 | 3 | 2 cells | +0.8 | +1.8 | +10 | -6 |
| Example 12 | 3×3 | 75 | 610 | 2.0 | 10 | 2 cells | +0.8 | +1.8 | +14 | -8 |
| Example 13 | 3×3 | 75 | 340 | 1.1 | 1.5 | 0 | +0.5 | +1.1 | +7 | -4 |
| Example 14 | 3×3 | 75 | 340 | 1.1 | 10 | 0 | +0.5 | +1.1 | +10 | -6 |
| Example 15 | 3×3 | 75 | 340 | 1.1 | 1.5 | 5 cells | +0.5 | +1.1 | +7 | -4 |
| Example 16 | 3×3 | 75 | 340 | 1.1 | 1.5 | 7 cells | +0.5 | +1.1 | +6 | -3 |
| Comp. Ex. 1 | 3×3 | 25 | - | - | - | - | - | - | - | - |
| Comp. Ex. 2 | 3×3 | 75 | - | - | - | - | 0 | 0 | 0 | 0 |
| Comp. Ex. 3 | 3×3 | 75 | 340 | 1.1 | 0.0 | 2 cells | 0 | +1.1 | -8 | +5 |
| Comp. Ex. 4 | 3×3 | 75 | 340 | 1.1 | | 2 cells | +0.5 | +1.1 | 0 | 0 |
| Comp. Ex. 5 | 3×3 | 75 | 340 | 1.1 | 13 | 2 cells | +0.5 | +1.1 | 0 | 0 |
| Comp. Ex. 6 | 3×3 | 75 | 300 | 0.98 | 1.5 | 2 cells | 0 | +1.0 | 0 | 0 |
| Comp. Ex. 7 | 3×3 | 75 | 700 | 2.3 | 1.5 | 2 cells | +0.8 | +3.5 | +8 | -4 |

### (Examples 2 to 16 and Comparative Examples 1 to 7)

The honeycomb structures were manufactured in the same manner as in Example 1 except that the "slit pattern", "slit depth", "boundary wall thickness", "radius of R portion", and "thickness of the second region" were varied as shown in Table 1 (Examples 2 to 16 and Comparative Examples 1 to 7). In the same manner as in Example 1, the honeycomb structures were measured for the regeneration limit value (g/liter), pressure loss (%), isostatic strength (%), and defect rate (%). The results are shown in Table 1. Incidentally, each of the honeycomb structures of Examples 1 to 12, 15, 16, and Comparative Examples 3 to 7 had a structure where the second region had a portion which was not adjacent to the R portion of the boundary wall as the honeycomb structure shown in Fig. 3 like the case of Example 1. In addition, each of the honeycomb structures of Examples 13 and 14 had a structure where the second region did not have a portion which was not adjacent to the R portion of the partition wall as the honeycomb structure shown in Fig. 1. Each of the honeycomb structures of Comparative Examples 1 and 2 had a structure where the partial segments did not have a boundary wall and where the first region and the second region were not separated from each other. In addition, in Comparative Example 3, 0.0 mm of the radius of the R portion means that the R portion had a corner portion without having an arc shape.

From Table 1, it can be understood that each of the honeycomb structures of Examples 1 to 15 had good regeneration limit value (g/liter), pressure loss (%), isostatic strength (%), and defect rate (%). It can be understood that the honeycomb structure of Comparative Example 3 had low regeneration limit value, low isostatic strength, and high defect rate because the radius of the R portion was 0.0 mm (the R portion was a corner portion). It can be understood that the the honeycomb structure of Comparative Example 4 had low isostatic strength and high defect rate since the radius of the R portion was small. It can be understood that the honeycomb structure of Comparative Example 5 had low isostatic strength and high defect rate since the radius of the R portion was large. It can be understood that the honeycomb structure of Comparative Example 6 had low regeneration limit value, low isostatic strength, and high defect rate because the boundary wall was thin. It can be understood that the honeycomb structure of Comparative Example 7 had large pressure loss because the boundary wall was thick.

A honeycomb structure of the present invention can suitably be used as a carrier for a catalytic device or a filter used for an environmental measure, collection of a specific material or the like in various fields in various fields such as chemistry, electric power, and iron and steel.

## Claims

1. A honeycomb structure comprising:
a honeycomb structured portion (4) having partition walls (8) separating and forming a plurality of cells (1) functioning as fluid passages and extending from one end face to the other end face and having a plurality of partial segments (3) separated and formed by a plurality of slits (2) extending along the cell extension direction and being open on an end face at one end of the structure, and
a buffer portion (5) disposed in the slits;
**characterized in that**, in a cross section perpendicular to the cell extension direction, each of the partial segments is formed by a first region (11) having an outer periphery surrounded by a boundary wall (14) formed by smoothly connecting a straight line and a curving line and a second region (12) being located to be adjacent to the first region (11) outside the boundary wall (14) and having a corner portion, and an R portion (15) as an arc-shaped portion of the boundary wall is disposed inside the position having the corner portion of the second region (12) of each of the partial segments (3), and
in a cross section perpendicular to the cell extension direction, the R portion (15) of the boundary wall has an arc shape having a radius of 1.5 to 10 mm, and the thickness of the boundary wall (14) is 1.1 to 2.0 times the thickness of the partition wall (8).

2. The honeycomb structure according to Claim 1, wherein the thickness of a portion not adjacent to the R portion (15) of the boundary wall (14) in the second region (12) corresponds to 5 cells or less.

3. The honeycomb structure according to Claim 1 or 2, wherein the second region (12) is disposed to surround the entire outer periphery of the first region (11).

4. The honeycomb structure according to claim 1 or claim 2, wherein a part of the outermost periphery of each of the partial segments (3) is the boundary wall (14).

## Patentansprüche

1. Wabenstruktur, die Folgendes umfasst:
einen Wabenstrukturabschnitt (4), der Trennwände (8) aufweist, die eine Vielzahl an Zellen (1) trennen und bilden, die als Fluiddurchlässe wirken und sich von einer Endfläche zur anderen Endfläche erstrecken und eine Vielzahl an Teilsegmenten (3) aufweist, die durch eine Vielzahl an Schlitzen (2) getrennt und gebildet sind, die sich entlang der Richtung erstrecken, in der sich die Zellen erstrecken, und an einer Endfläche an einem Ende der Struktur offen sind, und
einen Pufferabschnitt (5), der in den Schlitzen angeordnet ist;
**dadurch gekennzeichnet, dass** jedes der Teilsegmente im Querschnitt im rechten Winkel auf die Richtung, in der sich die Zellen erstrecken, durch einen ersten Bereich (11), der einen durch eine Begrenzungswand (14), die ausgebildet ist, indem eine gerade Linie und eine gekrümmte Linie stoßfrei verbunden sind, umgebenen Außenumfang aufweist, und einen zweiten Bereich (12) gebildet ist, der benachbart in Bezug auf den ersten Bereich (11) außerhalb der Begrenzungswand (14) angeordnet ist und einen Eckabschnitt aufweist, und dass ein R-Abschnitt (15) als bogenförmiger Abschnitt der Begrenzungswand innerhalb der Position mit dem Eckabschnitt des zweiten Bereichs (12) jedes Teilsegments (3) angeordnet ist, und
dass der R-Abschnitt (15) der Begrenzungswand im Querschnitt im rechten Winkel zu der Richtung betrachtet, in der sich die Zellen erstrecken, eine Bogenform mit einem Radius von 1,5 bis 10 mm aufweist und dass die Dicke der Begrenzungswand (14) 1,1- bis 2,0-mal so groß ist wie die Dicke der Trennwand (8).

2. Wabenstruktur nach Anspruch 1, worin die Dicke eines Abschnitts, der nicht benachbart in Bezug auf den R-Abschnitt (15) der Begrenzungswand (14) in dem zweiten Bereich (12) vorliegt, 5 Zellen oder weniger entspricht.

3. Wabenstruktur nach Anspruch 1 oder 2, worin der zweite Bereich (12) angeordnet ist, um den gesamten Außenumfang des ersten Bereichs (11) zu umgeben.

4. Wabenstruktur nach Anspruch 1 oder 2, worin ein Teil des äußersten Umfangs jedes der Teilsegmente (3) die Begrenzungswand (14) bildet.

## Revendications

1. Structure en nid d'abeilles comprenant:
une portion structurée en nid d'abeilles (4) ayant des parois de séparation (8) séparant et formant une pluralité d'alvéoles (1) fonctionnant comme passages de fluide et s'étendant d'une face d'extrémité à l'autre face d'extrémité et ayant une pluralité de segments partiels (3) séparés et formés par une pluralité de fentes (2) s'étendant dans la direction d'extension des alvéoles et étant ouverts sur une face d'extrémité à une extrémité de la structure, et
une portion de tampon (5) disposée dans les fentes;
**caractérisée en ce que**, en section transversale perpendiculaire à la direction d'extension des alvéoles, chacun des segments partiels est formé par une première région (11) ayant une périphérie extérieure entourée par une paroi de délimitation (14) formée en reliant en douceur une ligne droite et une ligne courbée, et une seconde région (12) étant située pour être adjacente à la première région (11) à l'extérieur de la paroi de délimitation (14) et ayant une portion de coin, et une portion R(15) en tant que portion en forme d'arc de la paroi de délimitation est disposée à l'intérieur de la position ayant la portion de coin de la seconde région (12) de chacun des segments partiels (3), et
en section transversale perpendiculaire à la direction d'extension des alvéoles, la portion R(15) de la paroi de délimitation a une forme d'arc ayant un rayon de 1,5 à 10 mm, et l'épaisseur de la paroi de délimitation (14) représente 1,1 à 2,0 fois l'épaisseur de la paroi de séparation (8).

2. Structure en nid d'abeilles selon la revendication 1, où l'épaisseur d'une portion non adjacente à la portion R(15) de la paroi de délimitation (14) dans la seconde région (12) correspond à 5 alvéoles ou moins.

3. Structure en nid d'abeilles selon la revendication 1 ou 2, dans laquelle la seconde région (12) est disposée pour entourer toute la périphérie extérieure de la première région (11).

4. Structure en nid d'abeilles selon la revendication 1 ou la revendication 2, dans laquelle une partie de la périphérie la plus extérieure de chacun des segments partiels (3) est la paroi de délimitation (14).
